# EUROPEAN PATENT APPLICATION

(11) **EP 1 435 330 A1**
(43) Date of publication of application: **07.07.2004**
(21) Application number: 03447001.3
(22) Date of filing: 06.01.2003
(51) Int. Cl.: B65D 55/08

(54) **Packaging container and method for sealing packaging containers**

(71) Applicant: NV Limbo Plastics, 3830 Wellen (BE)
(72) Inventor: Driessen, Jan, 3721 Vliermaalroot (BE); VanMechelen, Laurent, 3690 Zutendaal (BE)
(74) Representative: Van Reet, Joseph

(57) **Abstract**

The invention relates to a packaging container comprising two container halves (2,3) with corresponding peripheral flanges, wherein said corresponding peripheral flanges each comprise at least one peripheral rim (6,7), shaped in such way that the surfaces of the respective rims of the corresponding flanges of the two container halves lie, in closed position of the container, substantially on one surface and allow the sealing of said container halves by means of a peripheral sheet like sealing member (8), and to
such a packaging container, wherein said two container halves are sealed together by means of a peripheral sheet like sealing member (8) covering said respective rim surfaces (6,7) lying on one surface,
as well as to a packaging method comprising sealing two container halves (2,3) via corresponding peripheral flanges on said container halves (2,3), by applying a peripheral sheet like sealing member (8) over adjacent peripheral rim surfaces (6,7) on the peripheral flanges of the container halves.

## Description

The invention relates to sealable packaging, in particular for the food market.

Current packaging containers in this market segment involve at least one rigid part, either made of thermoplastic material specially treated with a thin coating of PE (polyethylene) or of other material, such as cardboard coated with a thin plastic layer, which is sealed by means of a foil material (plastic, aluminium, paper or cardboard). Glass containers sealed by means of a foil are also known.

A sealed packaging, ranging from product tight to completely gas tight, can be obtained quickly and efficiently, by forming a welding joint between the rigid part and the foil. Depending on the application the foil has to be cut open in order to open the packaging or can be pealed of.

Similar technology is applied for packaging containers in which the foil is replaced by a second rigid part (being the container lid) which is generally shaped as a dome. This may be achieved in various ways :
■ by welding two identical thermoplastic synthetic materials. In this way one obtains a good adhesion, but because the material is truly molten together, it is very difficult to open even if only a small portion of the periphery is welded. Typical examples are polystyrene containers with polystyrene lids.
■ by using a polyethylene (PE) coating applied on a plastic foil (in general PVC or PET). Both parts thus have a PE-layer on the weld side. As such this system provides good welding and the pealability can even be influenced by the type of PE an d by adjusting the temperature and the time during the welding. This however also involves the main drawback of this method : the welding temperature has to be conveyed through de support material which is, by definition, a thermoplastic material which is in itself temperature sensitive. The temperature has however to be perfectly appropriate to allow the welding of the two PE layers. As thermoplastic materials have a rather high isolation value, the high temperature does not easily reach the PE layer through the support material. In addition the moulding of dome shaped lids requires rather thick sheets (250 - 600 µ) which is quite high compared to the thickness of the welding layer. The method is accordingly quite critical and therefore risky. The consequences are bad welding joints due to insufficient melting of the PE layers (too short welding times or too low welding temperatures) or burned through sheets (too long welding times or too high welding temperatures). Between these two extreme phenomena the pealability (separating the container lid from the container bottom) is very uncertain. In particular when looking for microwave proof support materials (appropriately PP, polypropylene) one encounters insuperable obstacles. PP does indeed not resist to temperatures required to bring a PE-layer to the right welding temperature. In addition there are problems when stacking such parts durin processing, due to the sticky surface of the PE-layers.
■ a recent improvement of the technique involves applying locally a sealing medium on one or both surfaces of the plastic support material, by printing techniques. The welding temperatures are lower in this case so that the drawbacks of the method can be reduced. The quality of the welding joints is however still considerably less than that with conventional sealing foil techniques. A further disadvantage is the fact that the sealing medium remains soft for some time so that the seal remains fragile, even after cooling down completely. In addition the PP - application (microwave application) is not compatible with this technique due to insufficient adhesion of the sealing medium to PP.

It is the objective of this invention to provide packaging containers and a packaging method which overcomes the obstacles and drawbacks of the state of the art packaging techniques, and which, at the same time enables to satisfy many further current requirements and/or trends for packaging containers in the food market segment, such as in particular :
■ tamper proof and tamper evident properties
■ visibility of the product
■ reclosability of the packaging
■ reusability of the packaging
■ ease of use :
   ease of opening
   ease of access to the product
■ increasing the freshness lifetime of the product
■ extended conservation of the product with opened packaging
■ possibility of warming up the product in its packaging
■ linking sales-units of assorted products
■ applying information on the packaging
■ satisfying environmental aspects
   use of environmental friendly recyclable materials and/or selective separation of mono materials (less need of composite materials)
■ possibility of a suspension system for the packaging
■ new possibilities for (sealed) multi compartment convenience packaging

To achieve these objectives, the invention provides a packaging container comprising two container halves with corresponding peripheral flanges, designed to be closed and sealed together via said peripheral flanges, wherein said corresponding peripheral flanges each comprise at least one peripheral rim, shaped in such way that the surfaces of the respective rims of the corresponding flanges of the two container halves lie, in closed position of the container, substantially on one surface and allow the sealing of said two container halves by means of a peripheral sheet like sealing member covering said respective rim surfaces lying on one surface.

Another embodiment of the invention provides a packaging container comprising two container halves with corresponding peripheral flanges, closed and sealed together via said peripheral flanges, wherein said corresponding peripheral flanges each comprise at least one peripheral rim, shaped in such way that the surfaces of the respective rims of the corresponding flanges of the two container halves of the closed container lie substantially on one surface, and wherein said two container halves are sealed together by means of a peripheral sheet like sealing member covering said respective rim surfaces lying on one surface.

The two container halves can consist of two separate elements of the same or different material, or of two integral elements moulded together from the same material and connected together via a material hinge. These latter features are well know per se in this art.

The expression "sealed" as used herein has to be understood in a broad sense, i.e. in the sense of being attached or fixed together, rather than in the more limitative sense of "hermetically sealed", in which latter sense the expression is sometimes used elsewhere.

According to a preferred feature of the invention, the corresponding peripheral flanges may in particular each comprise at least one peripheral flat rim, shaped in such way that the surface of the respective rims lie, in closed position of the container, substantially on one flat surface.

According to a further preferred feature of the invention, the corresponding flat surfaces of the respective rims of the two container halves are designed so as to allow the sealing of said two container halves by means of one flat peripheral sheet like sealing member.

Still further preferred features of the invention involve that :
the container halves may be made of thermoplastic material;
one of the container halves may be made of transparent or translucent ;
the sealing member may be made of a sheet like material consisting of, or coated on one surface with, a plastic material which can be easily thermally welded to the material of the container halves;
the container halves may be made of a material selected from PVC, PET, PP, PS, glass, cardboard and metal;
the sealing member may be made of a sheet like material consisting of polyethylene material or coated one surface with polyethylene material, or consisting of adhesive foil;
the sealing member may thus for instance consist of or comprise a paper or cardboard layer with a polyethylene foil layer.

Such a sealing member, comprising a paper or cardboard top layer with a polyethylene welding layer may be particularly interesting for printing publicity and other information. It may also be used to provide means for a more easy removal of the sealing member (such as tearing provisions, etc.).

The invention also provides a packaging method which comprises sealing two container halves via corresponding peripheral flanges on said container halves, wherein the container is sealed by applying a peripheral sheet like sealing member over adjacent peripheral rim surfaces on the peripheral flanges of the container halves.

According to a preferred embodiment of the method of the invention one may apply a flat peripheral sheet like sealing member on flat peripheral rims.

According to a further feature of the method of the invention, the container is sealed by welding said peripheral sheet like sealing member to said adjacent peripheral rim surfaces on the peripheral flanges of the two container halves.

The sealing of the container halves may in particular be performed by welding techniques, in themselves very well know in the art, involving (a) peripheral welding element(s). In the method according to the invention the welding element(s) will be applied to the side of the containers' sealing rim with the peripheral sheet like sealing member, possibly with supporting elements applied to the other side.

The containers may be hermetically closed / sealed (gastight sealing) - optionally involving a controlled atmosphere - or not hermetically closed / sealed - with only partial sealing of the rims and/or aerating holes in one or both container halve(s).

Thanks to the third element or part (sealing member) of the container, which comprises the welding- and pealing material, the material of the other (rigid) parts, in particular the sealed dome (lid or cover) part, becomes less critical. A universal (all purpose) welding material, applied to the bottom side of this third part will ensure the connection of the two container halves, regardless whether they are made of the same of different material. The thickness of the two container halves is also not relevant anymore, as the welding temperature has only to be sent through the third (thin)element. It becomes therefore possible to use (microwave stable) PP for the rigid container halves. (**"dome" like** property of the packaging)

The third (sealing) element has a minimum width which corresponds to the width of the welding joints (adjacent peripheral rims of the corresponding flanges of the two container halves); this width may for instance be 12 mm. or more which constitutes a well visible band around the packaging. The sealing member therefore provides an obvious evidence of tampering (opening, damaging) to the closing / sealing element. (**tamper prove evident** property of the packaging).

Both (rigid) parts - and optionally even the third element - can be made of entirely transparent material (product visibility property of the packaging).

Thanks to the adjacent rims (and optionally additional click-closures) the two container halves can easily be made re closable **(reclosability** property of the packaging).

Because the two container halves may involve a reclosability function, the packaging may have a "second live" function (**re usability** property of the packaging).

The possibility for providing easy opening of the sealed packaging is an essential asset of the invention; the only (simple) thing to do is to peal off the strip from the flanges around the rigid packaging container, which can be compared to removing the protective foil from conventional margarine trays (**ease of opening** property of the packaging).
Due to the possibility of a tray with a dome shaped lid, the packaging according to the invention can provide very good accessibility to the product (for instance slices can be cut from a piece of cheese actually lying on its packaging tray : **ease of access** property of the packaging).
(Ease of opening and ease of access together provide the **ease of use** property of the packaging)

In the same way as for welding foil closures, the packaging concept according to the invention allows various measures increasing the freshness lifetime of the product, with or without MAP (modified atmosphere packaging) concept (increased **freshness lifetime** property of the packaging).

In view of the fact that the concept of the packaging according to the invention involves is reclosability, products can remain fresh for a longer period (property of **extended conservation** of the product with opened packaging).

The concept of the invention allows microwave warming, with or without anti-dehydration protection (such as a foil or lid). The rigid parts of the packaging container can, indeed, be made of microwave proof material (PP, C-PET, cardboard, etc. - it should be noted however that the last two make loose the "transparency" property). As a consequence the concept according to the invention allows the first ever transparent dome shaped microwave proof packaging container. (property of **warming up** the product in its packaging).

The concept allows to provide two separate packaging containers mutually linked via the third element (the sealing member), optionally in a way that the linked containers can be easily separated (property of **linking sales-units** of assorted products).

The concept allows a number of possibilities to provide information on the packaging :
first there is the peripheral sealing strip itself positioned around the container which can provide a first information carrier (which could possibly replace stickers and the like)
the centre piece of sheet like material left when cutting out the inner window from the material to make the peripheral sealing member / strip can on the other hand be used for several functions : parts thereof can be folded (upward for instance) to replace labels or stickers; the centre piece can also be applied to the bottom of the packaging with printed information; the centre piece can also be used as support for the product inside the container, for example for a piece of pie, etc. (the property of the invention to allow **applying information on the packaging**)

The two rigid elements of the packaging container can be made of one single mono material (actually without any sealing medium on these two parts); the sealing medium is only comprised on the most light and smallest part of the packaging container elements, being the third (sealing member) element. In the case of a coated paper or cardboard peripheral strip or ring, this is even recycled as if completely consisting of cardboard.
As the two rigid parts are furthermore separated in two individual parts by pealing of the third element and as, in addition, this third element can replace all stickers and labels, the waste material can be separated very selectively. This constitutes the property **satisfying environmental aspects**, i.e. use of environmental friendly recyclable materials and/or selective separation of mono materials (less need of composite materials).

As the outer shape of the third element (the sealing member) is not determined by the two rigid elements, this shape can also be provided such that it comprises a hanging device, such as a "euroslit" (**suspension system** property of the invention). This embodiment of the invention is more intended for non-food applications (for instance shaving blades, etc.).

The use of a separate (third) sheet like sealing member for the two packaging halves also offers new possibilities for designing multi compartment convenience packaging and for designing a packaging with a tamper proof sealing member.

The invention may involve various types of material for the rigid container halves. Possible materials (which can be used in combinations), are for instance :
- polyvinylchloride (PVC)
- polyethyleneterefthalate PET, either amorphous (A PET) or crystalline (C PET)
- polystyrene (PS)
- polypropylene (PP)
- biodegradable materials (such as PLA)
- cardboard, cardboard composites, paper
- ceramic materials.

The field of application of the invention includes, inter alia :
- complete replacement of existing sealed "dome" type packaging
- high quality fresh vegetables and fruit, where tamper proof or tamper evidence is very important due to the high value of the product
- fresh meat and meat preparations
- fresh fish and fish preparations
- prepared meals
- salads
- cheese
- cookies
- chocolate
- ice-cream preparations
- pastry (pies and the like)
- non-food applications

Further features and properties of the invention will become apparent from the following detailed description of preferred embodiments of packaging containers and packaging methods according to the invention. Reference is made in this detailed description to the enclosed drawings, in which :
Figure 1 illustrates the principle of the sealing method for packaging containers according to the invention;
Figure 2 is a perspective elevation view of one example of a packaging container according to the invention;
Figures 3 - 8 illustrate different preferred embodiments for the shape of the cooperating peripheral flanges for packaging containers according to the invention.

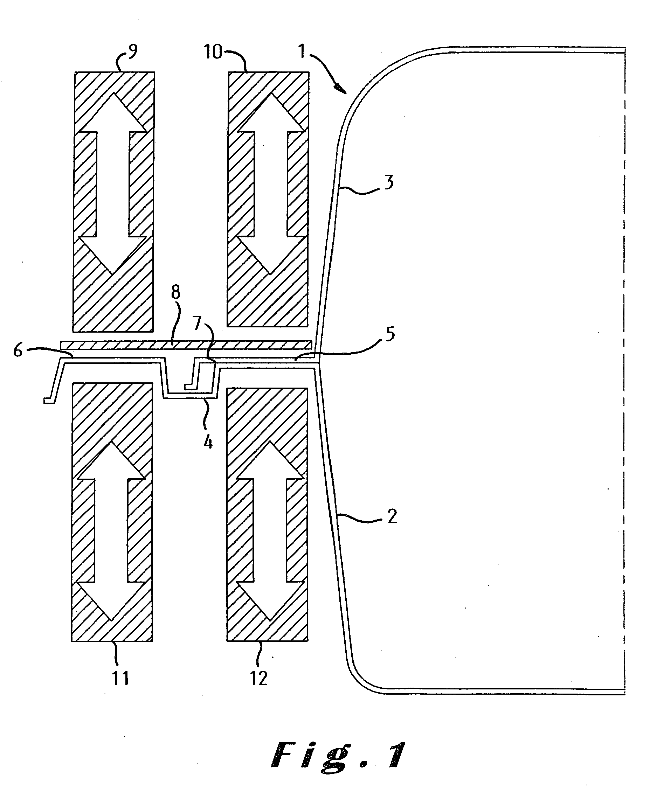

Figure 1 shows, shematically, a packaging container in accordance with the invention, designated as a whole with reference 1. The packaging container 1 comprises two container halves 2, 3 ("tray" or "pot" part 2, and "lid" or "dome" part 3), with its respective peripheral flanges 4 and 5.
The corresponding peripheral flanges 4 and 5 of the container halves 2 and 3 each comprise a peripheral rim 6 and 7, shaped in such way that the surfaces of the respective rims 6, 7 of the corresponding flanges 4, 5 lie, in closed position of the container, substantially on one surface.
It appears clearly from figure 1 that the sealing of the two container halves can thus be achieved very easily by applying a peripheral sheet like sealing member (designated by reference 8) onto the peripheral flange 4, 5 of the container, covering together both rim surfaces 6, 7.
The packaging container 1 is sealed by welding the lower surface of the sealing member 8 (for example the PE layer of a paper / PE sandwich sheet) to the upper surface of the rim 6 pertaining to the pot or tray half 2 of the packaging, as well as to the upper surface of the rim 7 pertaining to the lid or dome half 3 of the packaging. In order to perform the welding of the sealing member 8, melting heat has only to be applied by peripheral welding elements 9 and 10 provided on the sealing member side of the container (top side on the illustration), whereas the other side has only to be supported by corresponding peripheral supporting elements 11, 12. Depending on the requirements of the product the sealing member 8 can be welded to the peripheral rims 6 and 7 over their entire periphery to provide a hermetically closed packaging, or only over part of the rims, just enough to provide a sufficient sealing of the packaging.

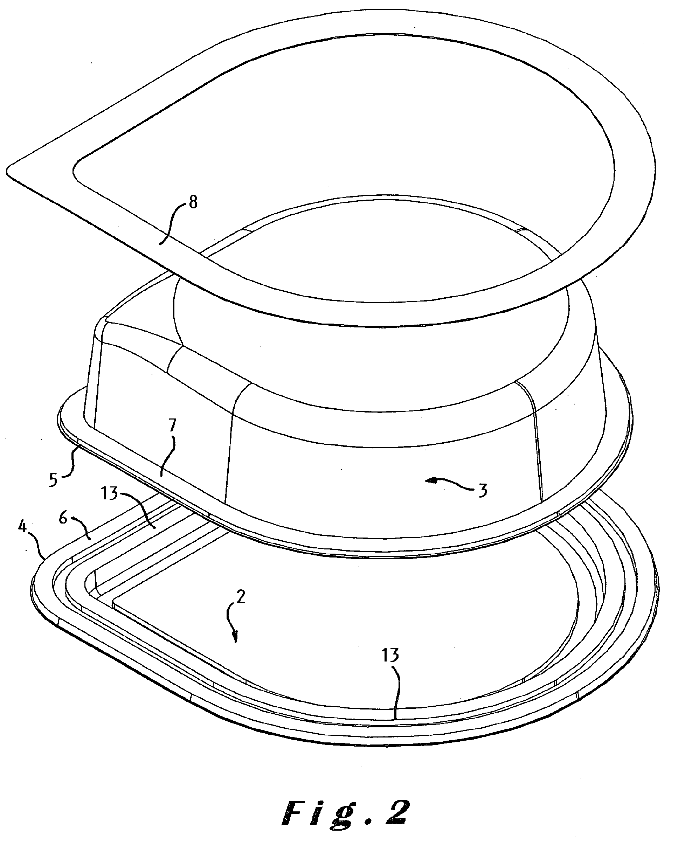

Figure 2 shows one totally arbitrary example of possible shapes for the constituent elements of a container according to the invention, with
- its tray halve 2, having peripheral flange 4 with a sealing rim 6,
- its dome lid 3, having a peripheral flange 5 with a sealing rim 7,
- its sealing member 8, consisting of a sheet like ring with a shape corresponding to the shape of the peripheral flanges 4 and 5.
In order to allow an optimal positioning of the container lid 3 on the container tray 2, as well as optimal performance of the welding elements 9, 10 and supporting elements 11, 12, the flange 4 of the container tray is provided with an additional peripheral rim13 cooperating in shape with the peripheral rim 7 of the container lid 3.

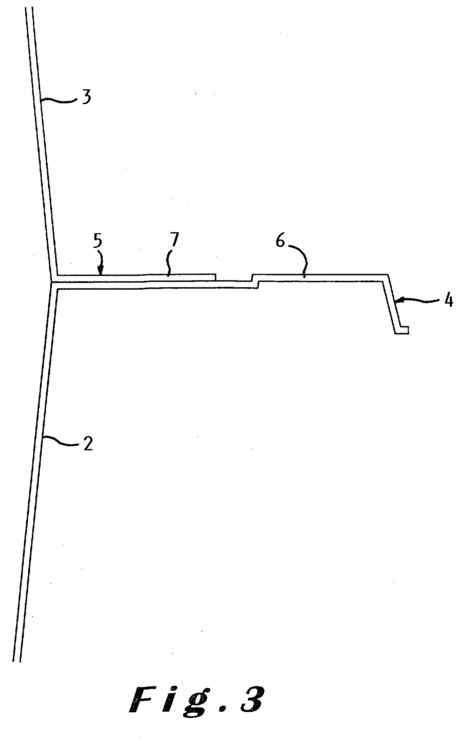

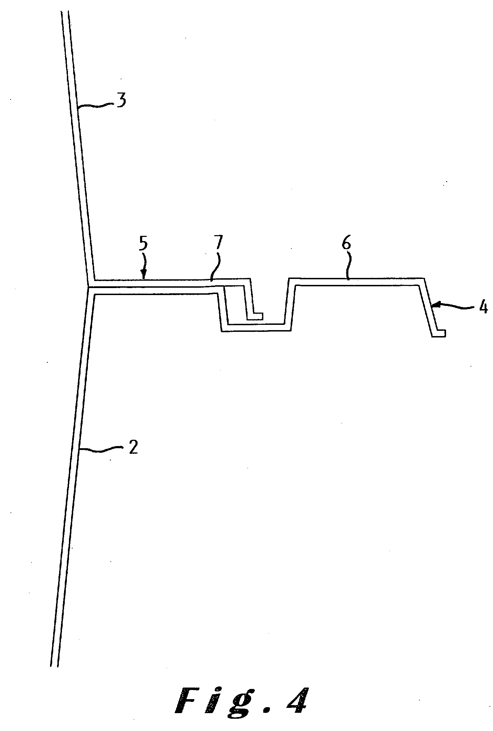

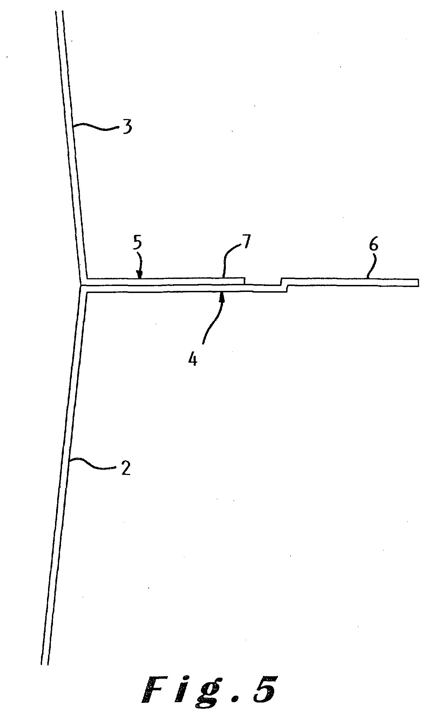

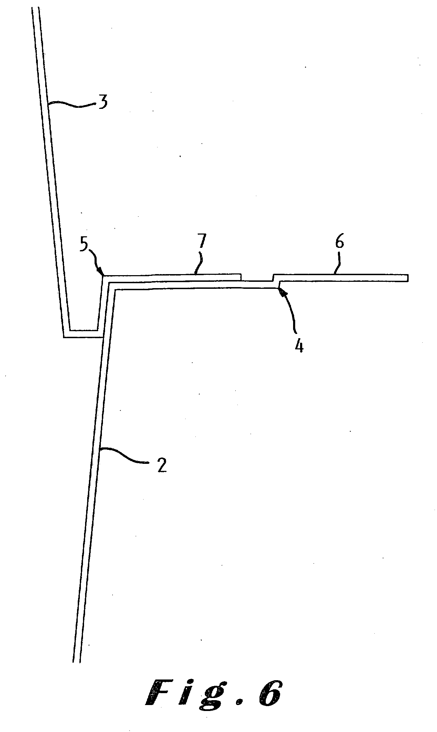

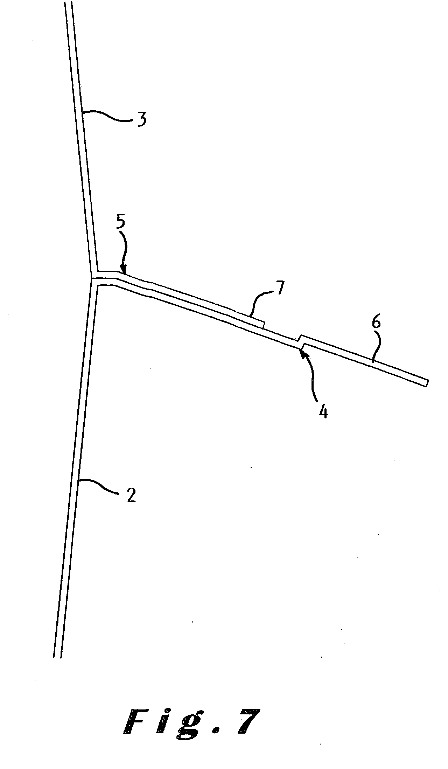

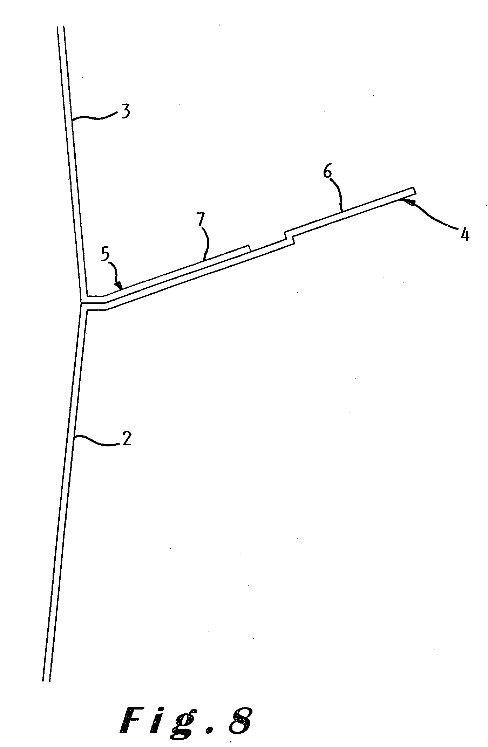

Figures 3 - 8 show, schematically, various other examples of possible embodiments of the shape of the peripheral rims 6 and 7 on, respectively the external tray or pot flange 4, and the lid flange 5.
It is thus observed that the rim and the flange may very well coincide, as in the embodiments of the lid or cover rims / flanges 5, 7 shown in figures 3, 5, 7 and 8.

While the invention has been disclosed in detail with reference to one specific embodiment of the invention, it is stressed that the invention is not limited to the specific details given for that embodiment and that many changes and modifications will be apparent to those skilled in the art without departing from the invention as set out in the above general disclosure and the attached claims

## Claims

1. Packaging container comprising two container halves with corresponding peripheral flanges, designed to be closed and sealed together via said peripheral flanges, **characterised in that** said corresponding peripheral flanges each comprise at least one peripheral rim, shaped in such way that the surfaces of the respective rims of the corresponding flanges of the two container halves lie, in closed position of the container, substantially on one surface and allow the sealing of said two container halves by means of a peripheral sheet like sealing member covering said respective rim surfaces lying on one surface.

2. Packaging container comprising two container halves with corresponding peripheral flanges, closed and sealed together via said peripheral flanges, **characterised in that** said corresponding peripheral flanges each comprise at least one peripheral rim, shaped in such way that the surfaces of the respective rims of the corresponding flanges of the two container halves of the closed container lie substantially on one surface and **in that** said two container halves are sealed together by means of a peripheral sheet like sealing member covering said respective rim surfaces lying on one surface.

3. Packaging container according to any one of claims 1 and 2, **characterised in that** said peripheral sheet like sealing member consists of thin, heat-sealable or adhesive, foil material.

4. Packaging container according to any one of claim 1 to 3, **characterised in that** said corresponding peripheral flanges each comprise at least one peripheral flat rim, shaped in such way that the surface of the respective rims lie, in closed position of the container, substantially on one flat surface.

5. Packaging container according to claim 4, **characterised in that** said flat surfaces of the respective rims of the two container halves allow the sealing of said two container halves by means of one flat peripheral sheet like sealing member.

6. Packaging container according to claim 5, **characterised in that** said respective rims lying substantially on one flat surface consist of two at least partially parallel adjacent peripheral flat rims.

7. Packaging container according to any one of the preceding claims, **characterised in that** the container halves are made of thermoplastic materials and the sealing member is made of a sheet like material consisting of a plastic material which can be easily thermally welded to the materials of the container halves , or which is coated on at least one surface with a plastic material which can be easily thermally welded to the materials of the container halves, or which is coated on one surface with an adhesive material.

8. Packaging method comprising sealing two container halves via corresponding peripheral flanges on said container halves, **characterised in that** the container is sealed by applying a peripheral sheet like sealing member over adjacent peripheral rim surfaces on the peripheral flanges of the container halves.

9. Method according to claim 8, **characterised in that** a flat peripheral sheet like sealing member is applied on flat peripheral rims.

10. Method according to anyone of claims 8 and 9, **characterised in that** the container is sealed by welding said peripheral sheet like sealing member to said adjacent peripheral rim surfaces on the peripheral flanges of the two container halves.
